# EUROPEAN PATENT APPLICATION

(11) **EP 0 712 011 A1**
(43) Date of publication of application: **15.05.1996**
(21) Application number: 95113547.4
(22) Date of filing: 29.08.1995
(51) Int. Cl.: G02B 5/00, G02B 6/42

(54) **Optical index matching system**

(30) Priority: 09.11.1994 US 336625
(71) Applicant: HEWLETT-PACKARD COMPANY, Palo Alto, California 94304-1181 (US)
(72) Inventor: Lichtenwalter, Kay, San Jose, CA 95127 (US)
(74) Representative: Schoppe, Fritz, Dipl.-Ing.

(57) **Abstract**

An optical coupling pad [40,50,150] for use in optical systems in which light passes between first and second optical components [20,41,102,120]. The present invention reduces reflections at the boundaries of the two optical components by filling the space between the two optical components [20,41,102,120] with a material having an index of refraction between that of the indices of the two optical components [20,41,102,120]. In the preferred embodiment of the present invention, the optical index matching material is provided in the form of a resilient pad [50] of a material adapted to be pressed between the first and second optical components [20,41,102,120] thereby providing an optical path from the first optical component [20,102] to the second optical component [41,120]. The material is transparent at the wavelength at which the optical components are to pass light. The material is chosen to have an index of refraction n such that 1<n≦n₁ or 1<n≦n₂, where n₁ and n₂ are the indices of refraction of the first and second optical components [20,41,102,120]. In the preferred embodiment of the present invention, the resilient pad [50] has first and second surfaces adapted to be in contact with the first and second optical components. respectively, and the first and second surfaces comprise materials that wet the surfaces of the first and second optical components [20,41,102,120] which come into contact with the first and second surfaces. The resilient pad [50] is preferably provided as a layer [51] of material with removable protective sheets [52,53] in contact with the surfaces that are to be placed in contact with the optical components.

## Description

### Field of the Invention

The present invention relates to instruments and the like that utilize optical measurements, and more particularly, to an improved method and apparatus for reducing reflections at the interface of two optical components.

### Background of the Invention

Many optical systems require light generated in one component to be measured in a second component. To reach the second component, the light must often traverse one or more boundaries between materials having different indices of retraction. At each boundary, a fraction of the light will be reflected. In addition to the loss of light intensity resulting from these reflections, the reflection process can cause other undesirable optical artifacts such as ghosts or flare.

Consider the case in which light is generated from a point source on the back surface of a thick glass plate, and the light is viewed from a location in front of the plate. Light reflected from the front surface of the plate and then again from the back surface of the plate can give rise to ghost images. That is, the viewer will see what appears to be several weaker light sources at different locations. If the ghost images are out of focus, they can reduce the contrast of the primary image, i.e., cause flare.

One method for reducing reflections at air glass interfaces is to coat the glass surface with an anti-reflective coating. For perpendicular incidence on a plane surface bounding a glass with index of refraction, n, It can be shown that a coating having an index of refraction √n and a thickness equal to a quarter of the wavelength of the light eliminates the losses due to reflection and the resulting ghosts. While such systems work well in optical systems with perpendicular reflection problems, these systems are less than ideal for non-perpendicular incidence. Furthermore, the cost of providing such coatings can be prohibitive in low cost systems.

A second prior art method of eliminating the problems generated by reflections at a glass-air-glass interface is to eliminate the air. For example, high powered microscopes use a layer of oil that wets the objective lens and cover-slip on the specimen. The air gap is replaced by an oil gap. Since the oil has the same index of refraction as the glass, there is no reflection of light at either the glass-oil or oil-glass interface. While this method provides an economical solution to the reflection problem, it is only applicable in those situations in which the void can be conveniently filled with oil or some similar material. Oil emersion is also a problem in terms of cleaning up the equipment after a set of measurements, since the oil must be removed from all of the surfaces to assure that it does not bind particles that could interfere with subsequent measurements.

Broadly, it is the object of the present invention to provide an improved anti-reflecting system.

It is a further object of the present invention to provide a system that has the economic advantages of an oil emersion system without the limitations imposed by the application of a viscous liquid that is difficult to remove.

These and other objects of the present invention will become apparent to those skilled in the art from the following detailed description of the invention and the accompanying drawings.

### Summary of the Invention

The present invention is an optical coupling pad for use in optical systems in which light passes between first and second optical components. The present invention reduces reflections at the boundaries of the two optical components by filling the space between the two optical components with a material having an index of refraction between that of the indices of the two optical components. In the preferred embodiment of the present invention, the material is provided in the form of a resilient pad of material adapted to be pressed between the first and second optical components thereby providing an optical path from the first optical component to the second optical component. The material is transparent at the wavelength at which the optical components are to pass light. The material is chosen to have an index of refraction n such that n₁≦n≦n₂, where n₁ and n₂ are the indices of refraction of the first and second optical components. In the preferred embodiment of the present invention, the resilient pad has first and second surfaces adapted to be in contact with the first and second optical components, respectively, and the first and second surfaces comprise materials that preferably wet the surfaces of the first and second optical components which come into contact with the first and second surfaces. The resilient pad is preferably provided as a layer of material with removable protective sheets in contact with the surfaces that are to be placed in contact with the optical components.

### Brief Description of the Drawings

Figure 1 is a prospective view of an assay plate of the type used in the medical arts.

Figure 2 is a cross-sectional view of an assay plate of the type shown in Figure 1 together with an exemplary apparatus to read the plate.

Figures 3 is a cross-sectional view of an assay plate and reader illustrating the use of oil to prevent reflections.

Figure 4 is a cross-sectional view of an assay plate and a reader illustrating the use of the present invention to reduce reflections in the optical path.

Figure 5 is a prospective view of the preferred embodiment of the present invention.

Figure 6 is a cross-sectional view of a second embodiment of an assay plate and a reader illustrating the use of the present invention to reduce reflections in the optical path.

### Detailed Description of the Invention

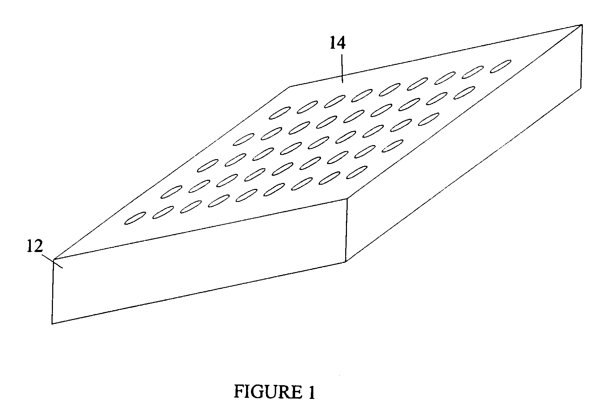

The present invention may be more easily understood with reference to a simple optical measurement system for reading the results of a bank of tests. For example, banks of medical tests based on antibody-antigen binding reactions are well known to the medical arts. For example, a number of different antibodies can be applied to a glass plate in different regions of the plate as shown in Figure 1. In this case, a glass plate has a plurality of antibody spots such as spot 14 on the surface of the plate. A specimen from a patient is brought into contact with the top surface of the plate. If the specimen includes an antigen that is bound by a particular antibody, the antigen will be bound to the spot corresponding to the antibody. After some biochemical processing, the amount of material bound to each spot can be determined by measuring the fluorescence generated by each spot. Methods for labeling biochemicals with fluorescent compounds are well known in the biochemical arts, and hence, will not be discussed in detail here.

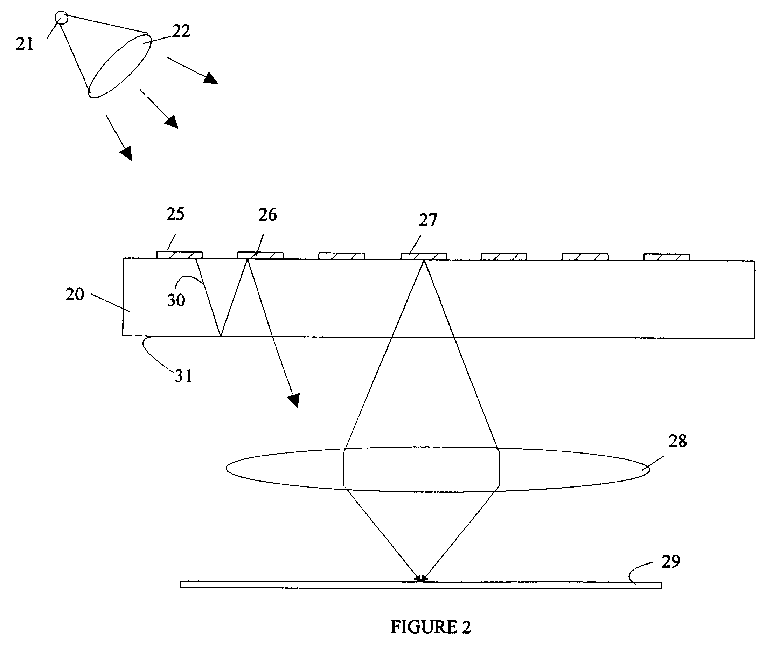

Refer now to Figure 2 which is a cross-sectional view of an assay plate 20 of the type shown in Figure 1. Exemplary antibody spots are shown at 25-27. The top surface of the plate is illuminated with the aid of a light source 21 whose light is distributed across the plate by a lens 22. Each of the spots will fluoresce at a known wavelength with an intensity related to the amount of material bound to the spot. The fluorescence is measured by an imaging detector 29 that forms an image of the spots on the top of the plate. The image is generated with the aid of a collecting lens 28.

The sensitivity of the test is limited by the amount of fluorescent emission from the spots. Hence, it is advantageous to collect as much of the light generated by each spot as possible. Thus, the collection system preferably has the widest possible aperture, and, as a result, the light collected is not restricted to light crossing the lower boundary 31 of plate 20 at perpendicular incidence. Hence. anti-reflective coatings cannot be used to eliminate "ghosts". For example, light leaving spot 25 that is reflected from surface 31 will appear to be emitted from spot 26. If spot 26 has very low emission, the reflected light may be sufficient to produce a false positive. That is, the ghost of spot 25 at the location of spot 26 may have sufficient intensity to cause the image corresponding to spot 26 on detector 29 to be above some minimum threshold, and erroneous results will be reported for the test.

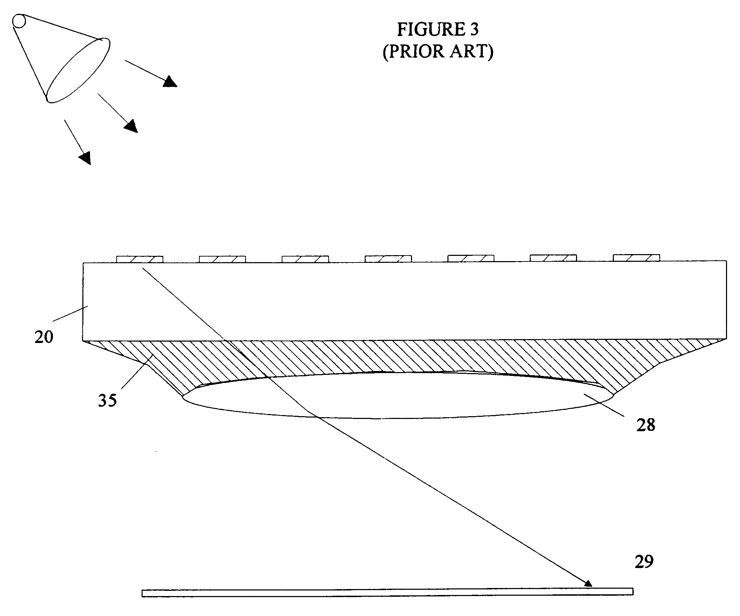

Refer now to Figure 3 which is a cross-sectional view of an assay plate 20 in a reader which utilizes oil immersion to reduce ghosts. Once again, the light from the various spots is imaged onto a detector 29 by a lens 28. To reduce reflections, a layer of oil 35 is provided between plate 20 and lens 28. The oil has an index of refraction that closely matches that of plate 20 and lens 28; hence, the reflections at the glass-oil boundaries are essentially eliminated.

It should be noted that oil emersion can only be employed in a few limited geometries. The oil is held between the lens and the plate by surface tension. If the assembly were turned on its side for any significant period of time, the oil would run out under the influence of gravity. Hence, oil emersion systems are usually implemented by lowering the objective lens into a spot of oil that is placed on a planar surface. The maximum distance between the surface of the plate and the objective is determined by the viscosity of the oil and is, at most, a few millimeters. Since the maximum distance is quite small, care must be taken to avoid forcing the lens against the glass plate and damaging one or both of them. Such systems typically use very precise positioning means to position the lens with respect to the glass plate and assume a high degree of skill on the part of the operator. Hence, oil emersion systems are not practical in situations in which relatively unskilled personnel using low cost equipment must be utilized.

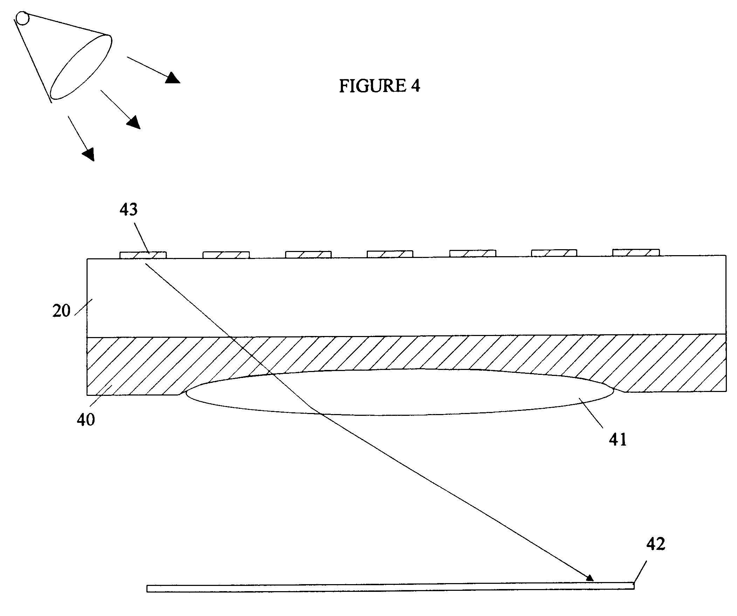

The present invention makes use of the basic concept inherent in oil immersion systems but avoids the problems related to using oil as the index matching material. Refer now to Figure 4 which is a cross-sectional view of an optical system utilizing the present invention in a configuration similar to that shown in Figure 3. Once again, an assay plate 40 having assay spots 43 on the top surface thereof is to be mated to an optical system having an objective lens 41. The space between lens 41 and the back surface of plate 40 is filled with a slab 45 of a flexible gelatin-like material that ideally has the same index of refraction as the glass from which plate 40 and lens 41 is constructed.

However, it will be apparent to those skilled in the art that the index match does not have to be precise to reduce the ghost problem. Hence, the precise degree of matching depends on the attenuation factor needed to reduce the effects of ghost images. This will, in general, depend on the specific application. For the purposes of this discussion, it is sufficient to note that for any desired attenuation factor for a ghost image, one of ordinary skill in the optical arts can compute the maximum tolerable difference in the index of refraction between slab 45 and the material from which plate 40 and lens 41 are constructed.

It will also be apparent to those skilled in the art that the present invention will provide reduced reflections as long as the index of refraction is between that of air and that of the optical components. The magnitude of the reflection at a surface is proportional to the square of the difference in refractive index between the materials on each side of the surface. Hence, if the index of refraction of slab 45 is greater than 1 and less than the index of refraction of the optical components, an improvement will realized.

In general, slab 45 can be introduced into the optical path by separating plate 40 and lens 41 by a distance to allow slab 45 to be inserted and then moving plate 40 relative to lens 41 so as to "pinch" slab 45 between plate 40 and lens 41. Since the thickness of slab 45 is not restricted by factors such as the viscosity of oil, the nominal distance between the optical components separated by slab 45 can be much larger than in the case of oil immersion based systems. Furthermore, the orientation of the optical components is no longer restricted, since the material of slab 45 will not flow, and hence, is not affected by gravity.

In the preferred embodiment of slab 45, the material from which it is constructed has two additional properties. First, the material must be sufficiently compressible to allow slab 45 to remain in contact with both the bottom of plate 40 and the top of lens 41 even if the distance between the plate and lens changes slightly. In some optical systems, the distance between plate 40 and lens 41 is determined by factors such as the thickness of plate 40. Microscopes are examples of such systems. Here, the focal point of the microscope between a cover slip (which corresponds to plate 40) and a specimen trapped between the cover slip and the microscope slide is adjusted by the user by changing the distance between lens 41 and the top of the cover slip, i.e., the bottom surface of plate 40. In many applications, however, the distance between lens 41 and plate 40 is fixed, and this first requirement is easily met.

The second requirement is that the material from which slab 45 is constructed preferably wets the surfaces of plate 40 and lens 41. This assures that there are no air gaps between the surfaces of slab 45 and the surfaces of the optical components that slab 45 is intended to mate. Any gap larger than a wavelength of light can cause a reflection. This condition can be satisfied by using a material for slab 45 whose surface includes sufficient liquid to provide the wetting in question. The material may inherently have this degree of wetness on its surface, or a layer of an appropriate liquid can be applied to the relevant surfaces at the time slab 45 is introduced between the optical components to which it mates.

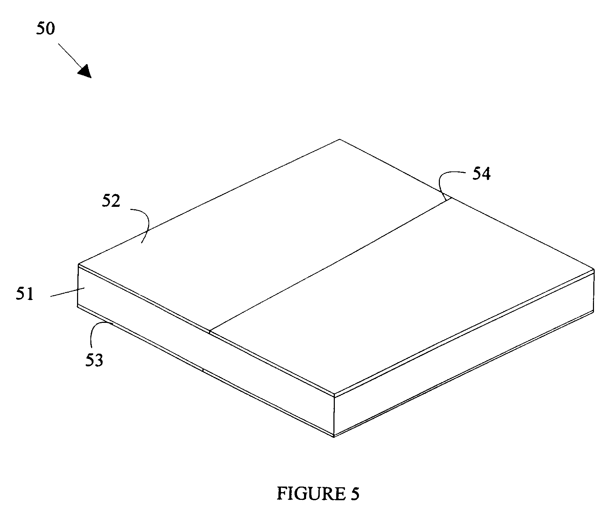

The preferred embodiment of slab 45 is shown in Figure 5 at 50. Slab 50 is constructed from a layer 51 of material satisfying the above described constraints with respect to its index of refraction, resilience, and wetness. Protective sheets 52 and 53 are applied to the outside of slab 51 to protect the material from drying and dirt. Just prior to use, the protective sheets are removed. A slit such as slit 54 may be included in the protective sheets to facilitate the removal thereof.

The optical matching inserts of the present invention may be constructed from a number of materials. As noted above, the inserts preferably match the index of refraction of the two optical components. If the two optical components have different indices of refraction, an insert according to the present invention preferably has an index of refraction that is intermediate between the indices of refraction of the two components. In addition, the material must be transparent and have a low modulus of conformation. Plasticized polyvinyl chloride having an index of refraction of 1.4, ethylene-vinyl acetate co-polymers having indices of refraction of 1.482, and polyisobutylene rubber having an index of refraction of 1.51 are suitable materials for the purposes of the present invention. These materials may be obtained from Scientific Polymer Products. In addition, Polymethyl siloxane polymers with an index refraction of 1.407 are available from Petrarch Chemicals.

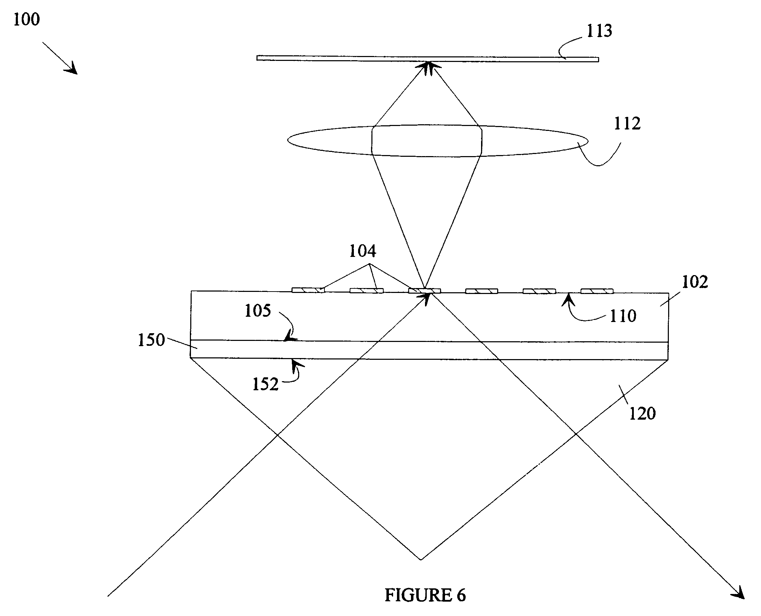

The present invention may also be utilized to "mate" an assay plate to an illumination system as shown in Figure 6 at 100. In this arrangement, the fluorescent spots 104 are excited by evarescent excitation by a light that is totally reflected by the inner surface 110 of assay plate 102. While the light is totally reflected, the electric field of the light extends sufficiently outside the boundary of the inner surface to excite the fluorescent spots 104. The light emitted by the fluorescent spots is imaged by a lens 112 onto a detector 113.

To provide a light beam that is totally reflected by inner surface 110, the incident light must enter at an angle to the normal of the surface that is greater than the "critical angle". This is typically accomplished by mating a prism 120 to the bottom surface of assay plate 102 and passing the incident light beam through the sides of the prism to allow the light to enter the assay plate at the desired angle.

While this arrangement allows very sensitive measurements of the fluorescent material on the outer surface of the assay plate, however, the arrangement is also very sensitive to reflections and/or scattering at boundary 105. Such reflections or scattering can give rise to light that escapes from the assay plate by striking inner surface 110 at an angle less than the critical angle. This light creates background noise in the detector and limits the sensitivity of the system.

An index matching pad 150 according to the present invention may be used to mate the prism to the assay plate, and thereby, prevent such reflections. Index matching pad 150 may be attached to assay plate 102 at their common surface 105. During processing, surface 152 of index matching pad 150 may be covered with a protective material as described with reference to Figure 5. Just prior to mating to prism 120, the protective material is peeled off presenting a clean surface for mating to prism 120.

In one embodiment of the present invention, the index matching pad includes a solvent that acts as a cleaner for the prism surface. When a pad is removed from the glass surface, wiping the surface with a dry optical wipe provides cleaning of the surface. In addition, the layer of solvent acts to dissolve any residue that may be present when the pad is applied, thereby uniformly wetting the interface between the optical components. Solvents for cleaning glass are well known to the arts, and hence, will not be discussed in more detail here.

Various modifications to the present invention will become apparent to those skilled in the art from the foregoing description and accompanying drawings. Accordingly, the present invention is to be limited solely by the scope of the following claims.

## Claims

1. An insert[40, 50, 150][40, 50, 150] for providing optical coupling at a predetermined wavelength between first and second optical components[20,41,102,120] having indices of refraction equal to n₁ and n₂, respectively, where n₁ ≦ n₂, said insert[40, 50, 150] comprising:
a resilient pad[50] of material adapted to be pressed between said first and second optical components[20,41,102,120] thereby providing an optical path from said first optical component[20,102] to said second optical component[41,120], said material being transparent at said predetermined wavelength, and said material having an index of refraction n such that 1<n≦n₁ or 1<n≦n₂.

2. The insert[40, 50, 150] of Claim 1 wherein n₁<n≦n₂.

3. The insert[40, 50, 150] of Claim 1 wherein said resilient pad[50] has first and second surfaces adapted to be in contact with said first and second optical components[20,41,102,120], respectively, and wherein said first and second surface comprise materials that wet the surfaces of said first and second optical components[20,41,102,120] which come into contact with said first and second surfaces.

4. The insert[40, 50, 150] of Claim 3 further comprising first and second removable layers[52, 53], said first layer[52] being in contact with said first surface of said insert[40, 50, 150] and said second layer being in contact with said second surface[53] of said insert[40, 50, 150].

5. A method for reducing reflections in an optical system comprising first and second optical components[20,41,102,120] having indices of refraction equal to n₁ and n₂, respectively, where n₁≦ n₂, said optical components being transparent at a predetermined wavelength, said method comprising the step of sandwiching a resilient pad[50] between said first and second optical components[20,41,102,120] such that said resilient pad[50] is in contact with said first and second optical components[20,41,102,120], wherein said resilient pad[50] comprises a material adapted to be pressed between said first and second optical components[20,41,102,120] thereby providing an optical path from said first optical component[20,102] to said second optical component[41,120], said material being transparent at said predetermined wavelength, and wherein said material has an index of refraction n such that 1<n≦n₁ or 1<n≦n₂.

6. The method of Claim 5 wherein said resilient pad has first and second surfaces adapted to be in contact with said first and second optical components, respectively, and wherein said first and second surface comprise materials that wet the surfaces of said first and second optical components[20,41,102,120] which come into contact with said first and second surfaces.

7. The method of Claim 5 wherein n₁<n≦n₂.

8. A removable optical assembly[150.102] adapted for optical connection to a fixed optical assembly[120] having a component with an index of refraction of n₂, said removable optical assembly[150.102] comprising:
a rigid optical component[102] having a first surface that is traversed by light and an index of refraction of n₁; and
a resilient pad[150] comprising a material having an index of refraction n, wherein 1<n≦n₁ or 1<n≦n₂.

9. The removable optical assembly[150.102] of Claim 8 wherein n₁<n≦n₂.
